# EUROPEAN PATENT SPECIFICATION

(11) **EP 2 757 335 B1**
(45) Date of publication and mention of the grant of the patent: **01.08.2018**
(21) Application number: 11872392.3
(22) Date of filing: 14.09.2011
(51) Int. Cl.: F25D 21/06, F25D 21/12

(54) **DEFROSTING REFRIGERATOR AND CONTROL METHOD THEREFOR**
ABTAUUNG EINES KÜHLSCHRANKS UND STEUERUNGSVERFAHREN DAFÜR
RÉFRIGÉRATEUR À DÉGIVRAGE ET PROCÉDÉ DE COMMANDE ASSOCIÉ

(43) Date of publication of application: 23.07.2014
(73) Proprietor: Hefei Midea Refrigerator Co., Ltd., Hefei, Anhui 230601 (CN); Hefei Hualing Co., Ltd., Hefei, Anhui 230601 (CN)
(72) Inventor: FANG, Zhongcheng, Hefei, Anhui 230601 (CN); WU, Tingbo, Hefei, Anhui 230601 (CN); JIANG, Mingbo, Hefei, Anhui 230601 (CN); ZONG, Zhaomeng, Hefei, Anhui 230601 (CN); JIN, Yongzhe, Hefei, Anhui 230601 (CN); FU, Xiuliang, Hefei, Anhui 230601 (CN)
(74) Representative: Maiwald Patent- und Rechtsanwaltsgesellschaft mbH
(86) International application number: PCT/CN2011/079604
(87) International publication number: WO 2013/037106

(56) References cited:
- CN-A- 1 178 315
- CN-A- 101 287 954
- CN-A- 101 586 898
- CN-A- 101 937 247
- CN-A- 102 116 556
- CN-A- 102 116 556
- DE-T2- 60 026 898
- JP-A- 2001 255 050
- KR-A- 20070 014 461
- KR-B1- 100 471 722
- US-A- 4 485 633
- US-A- 4 510 765
- US-A1- 2007 283 706

## Description

### BACKGROUND

### Technical Field

Embodiments of the present invention generally relate to refrigeration field, more particularly, to a refrigerator having defrosting function and a control method thereof.

### Description of the Related Art

Frost-free refrigerators are popular in market because of the advantages of uniform temperature, quick refrigeration and automatic defrosting.

The frost-free refrigerator in the related art indirectly cools food stored therein via a forced air convection circulation by a fan. US 4 510 765 A1 discloses a control unit for refrigerators or freezers.

US 2007/283706 A1 discloses a defrost operating method for a refrigerator which performs a defrost operation by controlling operations of a compressor and a fan on the basis of a continuous operation time of the compressor and surface temperatures of evaporators to prevent frost from being formed on the evaporators, when cool air is generated in a freezing chamber and a refrigerator chamber by circulating refrigerants through a refrigeration cycle built in a refrigerator main body and forcibly circulated by rotating the fan. The defrost operating method for the refrigerator can omit a general heater by performing the defrost operation by using the compressor and the fan. In addition, the defrost operating method for the refrigerator improves heat exchange efficiency and reduces power consumption by efficiently performing the defrost operation.

During refrigeration, a temperature of a surface of an evaporator is lower than the dew-point temperature of the air in the refrigerator, the air is circulated constantly in the refrigerator, and the frost is formed on the surface of the evaporator, thus greatly reducing an efficiency of heat exchange, so that the defrosting operation shall be performed after the refrigerator operates for a certain period of time.

The defrosting is performed by means of a defrosting device which is generally embodied as a defrosting heater such as an aluminum tube heater, a steel tube heater and a quartz tube heater, the defrosting heater is generally mounted on the surface of the evaporator or adjacent to the evaporator.

However, the defrosting device not only occupies an internal space of the refrigerator, but also increases a cost of the refrigerator. Furthermore, during defrosting, the electrical energy shall be supplied to the heater, so that the energy consumption of the refrigerator is increased by about 5% to about 10%. In addition, the local temperature of the defrosting heater is high when the defrosting heater is energized, which is disadvantageous for the refrigerator especially using R600a or other flammable refrigerants.

### SUMMARY

Embodiments of the present invention seek to solve at least one of the problems existing in the related art to at least some extent.

A first object of the present invention is to provide a refrigerator having defrosting function.

A second object of the present invention is to provide a control method of a refrigerator having defrosting function.

Accordingly, embodiments according to a first abroad aspect of the present invention provide a refrigerator having defrosting function comprising: a cabinet; an air channel plate disposed in the cabinet to define a refrigeration chamber and an air channel between the air channel plate and a rear wall of the cabinet within the cabinet; a door; an evaporator mounted in the air channel; a defrosting sensor disposed on the evaporator, at an outlet of the evaporator, to detect a temperature of the evaporator; a compressor coupled with the evaporator; a fan disposed in the air channel for circulating air between the air channel and the refrigeration chamber; and a controller coupled with the defrosting sensor, the compressor and the fan respectively, in which after the compressor operates for a predetermined number of ON-OFF cycles each time, the controller controls the compressor to stop and controls the fan to continuously operate until a temperature detected by the defrosting sensor reaching a first temperature.

With the refrigerator according to embodiments of the present invention, the controller controls operations of the compressor and the fan in accordance with the temperature detected by the defrosting sensor. When the compressor stops, the air is circulated between the refrigeration chamber and the air channel to defrost by operating the fan, so that there is no need to dispose a defrosting device in the refrigerator and thereby no electrical energy is consumed by the defrosting device, thus saving the internal space of the refrigerator and decreasing the cost of the refrigerator, moreover, the energy consumption of the refrigerator is also reduced. In addition, the defects of a high local temperature caused by the defrosting device are eliminated, and it is advantageous for the refrigerator using flammable refrigerants.

The refrigerator having defrosting function further comprises: a temperature sensor disposed in the refrigeration chamber to detect a temperature of the refrigeration chamber and coupled with the controller. During the predetermined number of ON-OFF cycles, when the temperature detected by the temperature sensor reaches a second temperature, the controller controls the compressor to stop and controls the fan to continuously operate until the temperature detected by the defrosting sensor reaches a third temperature, in which the first temperature is higher than the third temperature.

When the refrigerator is operated in an extreme environment, such as an environment with high temperature and high humidity, more frost may be formed on the surface of the evaporator, so that an auxiliary defrosting may be performed in the predetermined number of ON-OFF cycles of the compressor, besides the defrosting performed in each operation cycle. The auxiliary defrosting may be operated in each OFF period of the compressor (i.e. the compressor stops during this OFF period) of the predetermined number of ON-OFF cycles or after a plurality of ON-OFF cycles. The refrigerator according to embodiments of the present invention can defrost more frost and the defrosting time is reduced.

The first temperature is 3°C to 5°C.

During the predetermined number of ON-OFF cycles, when the temperature detected by the defrosting sensor reaches the third temperature, the controller controls the fan to stop.

The fan may stop for a period of time, thus increasing a lifetime of the fan.

After the compressor operates for the predetermined number of ON-OFF cycles or when the temperature detected by the temperature sensor reaches the second temperature, the controller controls the fan to increase a speed of the fan.

At the beginning of defrosting, the speed of the fan is increased so as to accelerate the heat exchange, shorten the defrosting time, and reduce the temperature increment.

Embodiments according to a second abroad aspect of the present invention provide a control method of a refrigerator having defrosting function, the control method comprising steps of: detecting if a compressor of the refrigerator operates for a predetermined number of ON-OFF cycles; and after the compressor operates for a predetermined number of ON-OFF cycles each time, stopping the compressor and continuously operating a fan of the refrigerator until a temperature of an evaporator of the refrigerator reaching a first temperature, so as to defrost the evaporator disposed in an air channel of the refrigerator.

With control method according to embodiments of the present invention, operations of the compressor and the fan are controlled in accordance with the temperature detected by the defrosting sensor. When the compressor stops, the air is circulated between the refrigeration chamber and the air channel to defrost by operating the fan, so that a defrosting device is not needed and thereby no electrical energy is consumed by the defrosting device, thus saving the internal space of the refrigerator and decreasing the cost of the refrigerator, moreover, the energy consumption of the refrigerator is also reduced. In addition, the defects of a high local temperature caused by the defrosting device are eliminated, and it is advantageous for the refrigerator using flammable refrigerants.

The control method further comprises the step of: during the predetermined number of ON-OFF cycles, when a temperature of a refrigeration chamber of the refrigerator reaches a second temperature, stopping the compressor and continuously operating the fan until the temperature of the evaporator reaches a third temperature, in which the first temperature is higher than the third temperature.

When the refrigerator is operated in an extreme environment, such as an environment with high temperature and high humidity, more frost may be formed on the surface of the evaporator, so that an auxiliary defrosting may be performed in the predetermined number of ON-OFF cycles of the compressor, besides the defrosting performed in each operation cycle. The auxiliary defrosting may be operated in each OFF period of the compressor (i.e. the compressor stops during this OFF period) of the predetermined number of ON-OFF cycles or after a plurality of ON-OFF cycles. The refrigerator according to embodiments of the present invention can defrost more frost and the defrosting time is reduced.

The first temperature is 3°C to 5°C.

During the predetermined number of ON-OFF cycles, when the temperature of the evaporator reaches the third temperature, the fan stops operating.

The fan may stop for a period of time, thus increasing a lifetime of the fan.

After the compressor operates for the predetermined number of ON-OFF cycles or when the temperature of the refrigeration chamber reaches the second temperature, a speed of the fan is increased.

At the beginning of defrosting, the speed of the fan is increased so as to accelerate the heat exchange, shorten the defrosting time, and reduce the temperature increment.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the accompanying drawings, in which:
Fig. 1 is a schematic view of a refrigerator according to embodiments of the present invention;
Fig. 2 is a schematic block diagram of a refrigerator according to embodiments of the present invention;
Fig. 3 is a schematic view illustrating curves of operations of a defrosting sensor, a fan and a compressor in a normal defrosting mode according to an embodiment of the present invention;
Fig. 4 is a flow chart illustrating a normal defrosting mode of a control method of a refrigerator according to an embodiment of the present invention;
Fig. 5 is a schematic view illustrating operations of a defrosting sensor, a fan and a compressor in an auxiliary defrosting mode according to another embodiment of the present invention;
Fig. 6 is a flow chart illustrating an auxiliary defrosting mode of a control method of a refrigerator according to another embodiment of the present invention.

### DETAILED DESCRIPTION OF THE EMBODIMENT(S)

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom" as well as derivative thereof (e.g., "horizontally", "downwardly", "upwardly", etc.) should be construed to refer to the orientation as then described or as shown in the drawings under discussion. These relative terms are for convenience of description and do not require that the present invention be constructed or operated in a particular orientation.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The refrigerator having defrosting function and a control method of a refrigerator having defrosting function will be described in the following with reference to the figures.

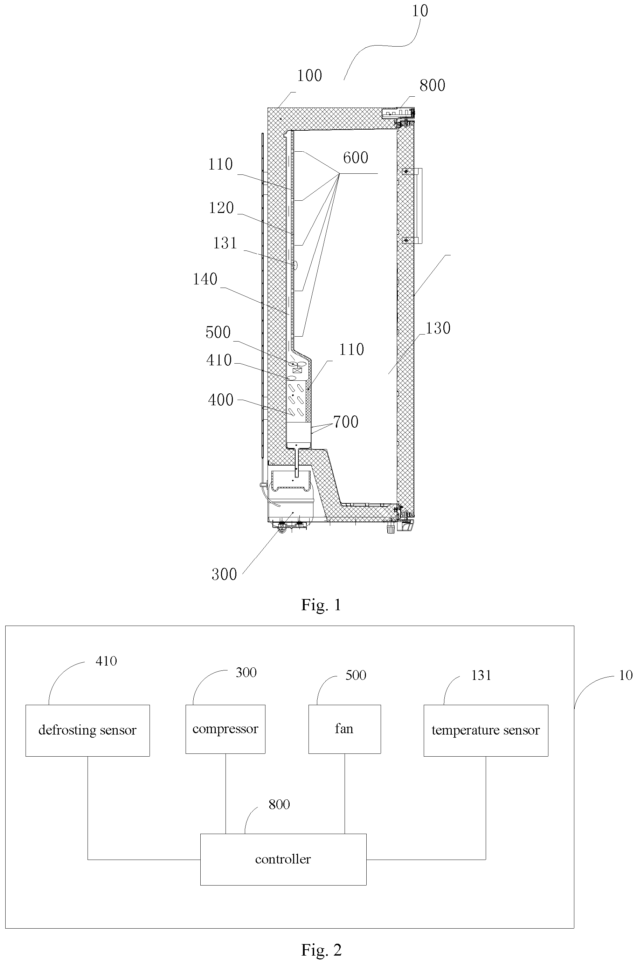

Fig. 1 is a schematic view of a refrigerator according to embodiments of the present invention. As shown in Fig. 1, the refrigerator having defrosting function 10 comprises a cabinet 100, a door 200 connected with the cabinet 100, a compressor 300, an evaporator 400 and a fan 500.

In an embodiment of the present invention, an air channel plate 120 is disposed in the cabinet 100 to define a refrigeration chamber 130 and an air channel 140 between the air channel plate 120 and a rear wall of the cabinet 100 within the cabinet 100. An air channel foam 110 is mounted on a surface of the air channel plate exposed to the air channel 140. An air outlet 600 communicating the air channel 140 with the refrigeration chamber 130 are formed in upper portions of the air channel foam 110 and the air channel plate 120, and an air inlet 700 communicating the air channel 140 with the refrigeration chamber 130 are formed in lower portions of the air channel foam 110 and the air channel plate 120.

In an embodiment of the present invention, the evaporator 400 is mounted in the air channel 140. A defrosting sensor 410 for detecting the temperature of the evaporator 400 is disposed on the evaporator 400.

The defrosting sensor 410 is disposed at an outlet of the evaporator 400 where much frost is easiest to form. The compressor 300 coupled with the evaporator 400 is disposed in a compressor compartment located in a lower- rear side of the cabinet 100. The fan 5 is disposed in the air channel 140, and the air is circulated between the air channel 140 and the refrigeration chamber 130 by the fan 500.

More specifically, the fan 5 is disposed at a position adjacent to the evaporator 400, for example, adjacent to the upper portion of the evaporator 400.

In an embodiment of the present invention, the refrigerator 10 having defrosting function further comprises a controller 800 disposed in a top of the cabinet 100.

Fig. 2 is a schematic block diagram of a refrigerator according to embodiments of the present invention. As shown in Fig. 2, the controller 800 is coupled with the defrosting sensor 410, the compressor 300 and the fan 500 respectively, so that after the compressor 300 operates for a predetermined number of ON-OFF cycles each time, the controller 800 controls the compressor 300 to stop and controls the fan 500 to continuously operate until a temperature detected by the defrosting sensor 410 reaching a first temperature.

With the refrigerator 10 having defrosting function according to embodiments of the present invention, the controller 800 controls operations of the compressor 300 and the fan 500 in accordance with the temperature detected by the defrosting sensor 410. When the compressor 300 stops, the air is circulated between the refrigeration chamber 130 and the air channel 140 to defrost by operating the fan 500, so that an additional defrosting device is not needed and thereby no electrical energy is consumed by the defrosting device, thus saving the internal space of the refrigerator and decreasing the cost of the refrigerator. Moreover, the energy consumption of the refrigerator is also reduced. In addition, the defects of a high local temperature caused by the defrosting device are eliminated, and it is advantageous for the refrigerator using flammable refrigerants.

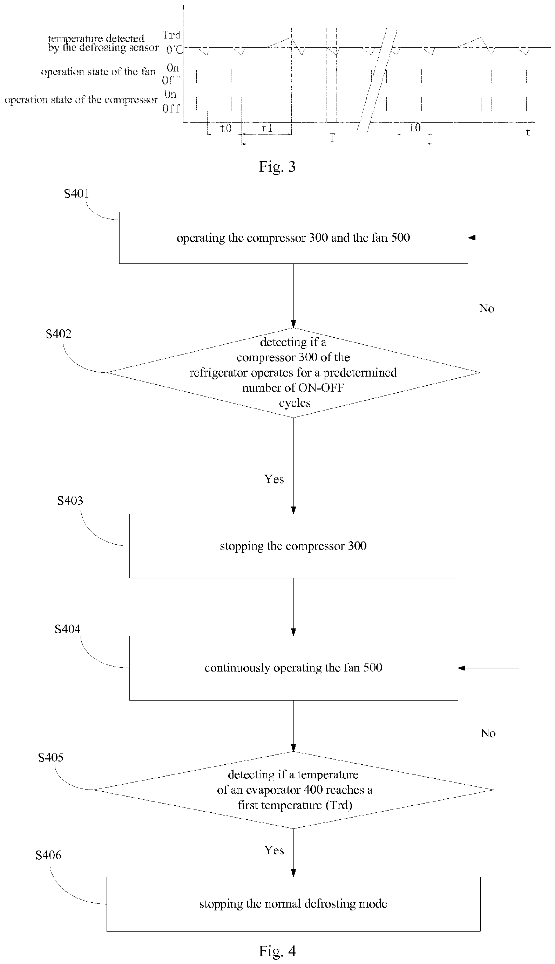

Fig. 3 is a schematic view illustrating curves of operations of a defrosting sensor, a fan and a compressor in a normal defrosting mode according to an embodiment of the present invention.

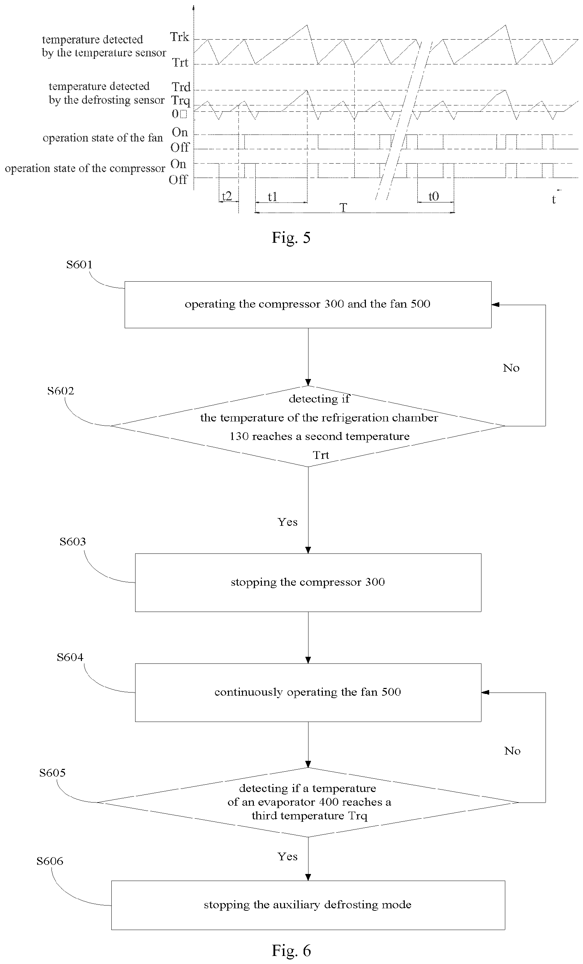

The refrigerator 10 having defrosting function defrosts once in each operation cycle. The operation cycle means a time interval between a beginning of one defrosting action and a beginning of the next defrosting action of the refrigerator (that is, T shown in Fig. 2 indicates an operation cycle). The operation cycle is generally determined by the accumulated operation time of the compressor, the "ON" time of the refrigerator or other factors. Each operation cycle consists of a predetermined number of ON-OFF cycles (t0) and one defrosting cycle (t1). As shown in Figs. 3 and 5, term "ON" means that the fan or the compressor operates, and term "OFF" means that the fan or the compressor stops.

After the compressor 300 operates for the predetermined number of ON-OFF cycles, the controller 800 controls the refrigerator to operate for a defrosting cycle (t1).

When the refrigerator operates for the defrosting cycle (t1), the compressor 300 stops and the fan 500 continuously operates. The air in the refrigeration chamber 130 exchanges heat with a surface of the evaporator 400 until the temperature detected by the defrosting sensor 410 reaching a first temperature (Trd), then the controller 800 controls the refrigerator 10 to stop defrosting and back to a normal refrigeration mode. The defrosting cycle (t1) is determined by the first temperature (Trd) which is generally higher than 0°C.

The first temperature (Trd) is 3°C to 5°C, more preferably, is 5°C.

Fig. 4 is a flow chart illustrating a normal defrosting mode of a control method of a refrigerator according to an embodiment of the present invention.

As shown in Fig. 4, the control method of a refrigerator in the normal defrosting mode comprises steps of:
S401, operating the compressor 300 and the fan 500.
S402, detecting if the compressor 300 operates for the predetermined number of ON-OFF cycles.
S403, if the compressor does, stopping the compressor 300; if the compressor does not, returning back to Step S401.
S404, continuously operating the fan 500.
S405, detecting if the temperature of the evaporator 400 reaches the first temperature (Trd).
S406, if the temperature of the evaporator does, stopping the normally defrosting; if the temperature of the evaporator does not, returning back to Step S404.

In embodiments of the present invention, the compressor 300 and the fan 500 are controlled according to the temperature of the evaporator 400. When the compressor 300 stops, the air is circulated between the refrigeration chamber 130 and the air channel 140 to defrost by operating the fan 500, so that an additional defrosting device is not needed and thereby no electrical energy is consumed by the defrosting device, thus saving the internal space of the refrigerator and decreasing the cost of the refrigerator, moreover, the energy consumption of the refrigerator is also reduced. In addition, the defects of a high local temperature caused by the defrosting device are eliminated, and it is advantageous for the refrigerator using flammable refrigerants.

In an embodiment, the refrigerator 10 having defrosting function 10 further comprises a temperature sensor 131. The temperature sensor 131 is disposed in the refrigeration chamber 130 for detecting a temperature in the refrigeration chamber 130.

In an embodiment of the present invention, the temperature sensor 131 is disposed on an inner wall of the refrigeration chamber 130. As shown in Fig. 2, the controller 800 is coupled with the temperature sensor 131, so as to stop the compressor 300 and continuously to operate the fan 500 until the temperature detected by the defrosting sensor 410 reaches a third temperature in the predetermined number of ON-OFF cycles, when the temperature detected by the temperature sensor 131 reaches a second temperature.

The first temperature is higher than the third temperature. Preferably, the second temperature is about 2°C.

In embodiments of the present invention, when the refrigerator is operated in an extreme environment, such as an environment with high temperature and high humidity, more frost may be formed on the surface of the evaporator 400, so that an auxiliary defrosting may be performed in the predetermined number of ON-OFF cycles of the compressor 400, besides the defrosting performed in each operation cycle. The auxiliary defrosting may be operated in each OFF period of the compressor 400 (i.e. the compressor 300 stops during this OFF period) of the predetermined number of ON-OFF cycles or after a plurality of ON-OFF cycles. The refrigerator according to embodiments of the present invention can defrost more frost and the defrosting time is reduced.

Fig. 5 is a schematic view illustrating operations of a defrosting sensor, a fan and a compressor in an auxiliary defrosting mode according to embodiments of the present invention.

Fig. 5 illustrates operations of the auxiliary defrosting mode in one ON-OFF cycle (t0). When the temperature detected by the temperature sensor 131 reaches a starting temperature (Trk), the compressor 300 and the fan 500 operate to cool, so the temperature in the refrigeration chamber 130 decreases and the frost is formed on the surface of the evaporator 400.

When the temperature detected by the temperature sensor 131 reaches a second temperature (Trt), the compressor 300 stops, the fan 500 continuously operates, and the air in the refrigeration chamber 130 exchanges heat with the surface of the evaporator 400 until the temperature detected by the defrosting sensor 410 reaches a third temperature (Trq), then the fan 500 stops. In the predetermined number of ON-OFF cycles (t0), the operation time (t1) of the compressor 300 is determined by both of the Trk and the Trt, and the operation time (t2) of the fan 500 is determined by the third temperature (Trq) which is generally higher than or equal to 0°C.

In an embodiment of the present invention, when the temperature detected by the defrosting sensor 410 reaches the third temperature (Trq), the controller 800 stops the fan 500. Therefore, before the next operation cycle (T) starts, the fan 500 may operate continuously, and may stop for a period of time during the compressor 300 stopping. According to the present invention, the first temperature (Trd) is higher than the third temperature (Trq).

More specifically, the first temperature (Trd) is 5°C and the third temperature (Trq) is 3°C, so that the fan 500 may stop for the period of time in each of the ON-OFF cycles (t0), so as to increase a life time thereof. According to the present invention, the controller 800 increases an speed of the fan 500, after the compressor 300 operates for the predetermined number of ON-OFF cycles (t0), or when the temperature detected by the temperature sensor 131 reaches the second temperature (Trt).

According to embodiments of the present invention, at the beginning of defrosting, the speed of the fan 500 is increased (the increased speed of the fan is higher than that of the fan 500 under a condition that the compressor 300 operates for refrigerating) so as to accelerate the heat exchange, shorten the defrosting time, and reduce the temperature increment.

In an embodiment of the present invention, during defrosting, with the increment of the temperature detected by the defrosting sensor 410, the controller 800 may reduce the rotation speed of the fan 500 gradually, or may even stop the fan 500.

Fig. 6 is a flow chart illustrating the control method of the refrigerator in the auxiliary defrosting mode according to embodiments of the present invention.

As shown in Fig. 6, the control method of the refrigerator in the auxiliary defrosting mode comprises steps of:
S601, operating the compressor 300 and the fan 500.
S602, detecting if the temperature of the refrigeration chamber 130 reaches the second temperature Trt.
S603, if the temperature of the refrigeration chamber 130 does, stopping the compressor 300; if the temperature of the refrigeration chamber 130 does not, returning back to Step S601.
S604, continuously operating the fan 500.
S605, detecting if the temperature of the evaporator 400 reaches the third temperature (Trq).
S606, if the temperature of the evaporator 400 does, stopping the auxiliary defrosting; if the temperature of the evaporator 400 does not, returning back to Step S604.

In embodiments of the present invention, when the refrigerator is operated in an extreme environment, such as an environment with high temperature and high humidity, more frost may be formed on the surface of the evaporator 400, so that an auxiliary defrosting may be performed in the predetermined number of ON-OFF cycles of the compressor, besides the defrosting performed in each operation cycle. The auxiliary defrosting may be operated in each OFF period of the compressor 300 (i.e. the compressor 300 stops during this OFF period) of the predetermined number of ON-OFF cycles or after a plurality of ON-OFF cycles. The refrigerator according to embodiments of the present invention can defrost more frost and the defrosting time is reduced.

In an embodiment of the present invention, when the temperature of the evaporator 400 reaches the third temperature (Trq), the fan 500 may stop. Therefore, before the next operation cycle (T) starts, the fan 500 may operate continuously, and may stop for a period of time during the compressor 300 stopping. According to the present invention, the first temperature (Trd) is higher than the third temperature (Trq).

More specifically, the first temperature (Trd) is 5°C and the third temperature (Trq) is 3°C, so that the fan 500 may stop for a period of time in each of the ON-OFF cycles (t0), so as to increase a life time thereof. According to the present invention, the controller 800 increases the speed of the fan 500, after the compressor 300 operates for the predetermined number of ON-OFF cycles (t0), or when the temperature of the refrigeration chamber 130 reaches the second temperature (Trt).

With the control method according to embodiments of the present invention, at the beginning of defrosting, the speed of the fan 500 is increased (the increased speed of the fan 500 is higher than that of the fan under a condition that the compressor 300 operates for refrigerating) so as to accelerate the heat exchange, shorten the defrosting time, and reduce the temperature increment.

In an embodiment of the present invention, during defrosting, with the increment of the temperature detected by the defrosting sensor 410, the controller 800 may reduce the rotation speed of the fan 500 gradually, or even may stop the fan 500.

## Claims

1. A refrigerator having defrosting function, comprising: a cabinet (100), an air channel plate (120) disposed in the cabinet to define a refrigeration chamber (130) and an air channel (140) between the air channel plate (120) and a rear wall of the cabinet within the cabinet, a door (200), and an evaporator (400) mounted in the air channel, wherein the refrigerator further comprises: a defrosting sensor (410) disposed on the evaporator to detect a temperature of the evaporator, a compressor (300) coupled with the evaporator, a fan (500) disposed in the air channel for circulating air between the air channel (140) and the refrigeration chamber (130), **characterized in that** the defrosting sensor (410) is disposed at an outlet of the evaporator, a controller (800) coupled with the defrosting sensor (410), the compressor (300) and the fan (500) respectively, wherein after the compressor (300) operates for a predetermined number of ON-OFF cycles each time, the controller (800) controls the compressor (300) to stop and controls the fan (500) to continuously operate until a temperature detected by the defrosting sensor (410) reaching a first temperature which is 3°C to 5°C, and
a temperature sensor (131) disposed in the refrigeration chamber (130) to detect a temperature of the refrigeration chamber (130) and coupled with the controller (800),
wherein during the predetermined number of ON-OFF cycles, when the temperature detected by the temperature sensor (131) reaches a second temperature, the controller (800) controls the compressor (300) to stop and controls the fan (500) to continuously operate until the temperature detected by the defrosting sensor (410) reaches a third temperature, and when the temperature detected by the defrosting sensor (410) reaches the third temperature, the controller (800) controls the fan (500) to stop
wherein the first temperature is higher than the third temperature,
wherein after the compressor (300) operates for the predetermined number of ON-OFF cycles or when the temperature detected by the temperature sensor (131) reaches the second temperature, the controller (800) controls the fan (500) to increase a speed.

2. A control method of a refrigerator having defrosting function, **characterized in that** the method comprises steps of:
detecting if a compressor (300) of the refrigerator operates for a predetermined number of ON-OFF cycles,
after the compressor (300) operates for a predetermined number of ON-OFF cycles each time, stopping the compressor (300) and continuously operating a fan (500) of the refrigerator until a temperature of an evaporator (400) of the refrigerator reaching a first temperature which is 3°C to 5°C, so as to defrost the evaporator (400) disposed in an air channel (140) of the refrigerator, and
during the predetermined number of ON-OFF cycles, when a temperature of a refrigeration chamber (130) of the refrigerator reaches a second temperature, stopping the compressor (300) and continuously operating the fan (500) until the temperature of the evaporator (400) reaches a third temperature, and when the temperature of the evaporator (400) reaches the third temperature, the fan (500) stops operating,
wherein the first temperature is higher than the third temperature,
wherein after the compressor (300) operates for the predetermined number of ON-OFF cycles or when the temperature of the refrigeration chamber (130) reaches the second temperature, a speed of the fan (500) is increased.

## Patentansprüche

1. Kühlschrank mit Abtaufunktion, aufweisend: ein Gehäuse (100), eine Luftkanalplatte (120), welche in dem Gehäuse angeordnet ist, um eine Kühlkammer (130) und einen Luftkanal (140), zwischen der Luftkanalplatte (120) und einer Rückwand des Gehäuses, innerhalb des Gehäuses zu definieren, eine Tür (200) und einen Verdampfer (400), welcher in dem Luftkanal montiert ist,
wobei der Kühlschrank ferner aufweist: einen Abtausensor (410), welcher an dem Verdampfer angeordnet ist, um eine Temperatur des Verdampfers zu erfassen, einen Kompressor (300), welcher mit dem Verdampfer gekoppelt ist, ein Gebläse (500), welches im Luftkanal angeordnet ist, um Luft zwischen dem Luftkanal (140) und der Kühlkammer (130) zu zirkulieren, **dadurch gekennzeichnet, dass** der Abtausensor (410) an einem Ausgang des Verdampfers angeordnet ist,
eine Steuerung (800), welche mit dem Abtausensor (410), dem Kompressor (300) bzw. dem Gebläse (500) gekoppelt ist, wobei, nach jedem Betrieb des Kompressors (300) für eine vorbestimmte Anzahl von EIN-AUS-Zyklen, die Steuerung (800) den Kompressor (300) steuert, zu stoppen und das Gebläse (500) steuert, kontinuierlich weiter zu arbeiten, bis eine vom Abtausensor (410) erfasste Temperatur eine erste Temperatur erreicht, welche 3°C bis 5°C beträgt, und
einen Temperatursensor (131), welcher in der Kühlkammer (130) angeordnet ist, um eine Temperatur der Kühlkammer (130) zu erfassen und mit der Steuerung (800) gekoppelt ist,
wobei während der vorbestimmten Anzahl von EIN-AUS-Zyklen, wenn die durch den Temperatursensor (131) erfasste Temperatur eine zweite Temperatur erreicht, die Steuerung (800) den Kompressor (300) steuert zu stoppen und das Gebläse (500) steuert, kontinuierlich weiter zu arbeiten, bis die durch den Abtausensor (410) erfasste Temperatur eine dritte Temperatur erreicht, und wenn die durch den Abtausensor (410) erfasste Temperatur die dritte Temperatur erreicht, die Steuerung (800) das Gebläse (500) steuert, zu stoppen,
wobei die erste Temperatur höher ist als die dritte Temperatur,
wobei, nachdem der Kompressor (300) für die vorbestimmte Anzahl von EIN-AUS-Zyklen betrieben wurde oder wenn die von dem Temperatursensor (131) erfasste Temperatur die zweite Temperatur erreicht, die Steuerung (800) das Gebläse (500) steuert, eine Geschwindigkeit zu erhöhen.

2. Steuerungsverfahren für einen Kühlschrank mit Abtaufunktion, **dadurch gekennzeichnet, dass** das Verfahren die folgenden Schritte aufweist:
Erkennen, ob ein Kompressor (300) des Kühlschranks für eine vorbestimmte Anzahl von EIN-AUS-Zyklen betrieben wurde,
jedes Mal nachdem der Kompressor (300) für eine vorbestimmte Anzahl von EIN-AUS-Zyklen betrieben wurde, stoppen des Kompressors (300) und kontinuierliches weiterbetreiben eines Gebläses (500) des Kühlschranks, bis eine Temperatur eines Verdampfers (400) des Kühlschranks eine erste Temperatur erreicht, welche 3°C bis 5°C beträgt, um den in einem Luftkanal (140) des Kühlschranks angeordneten Verdampfer (400) abzutauen, und
während der vorbestimmten Anzahl von EIN-AUS-Zyklen, wenn eine Temperatur einer Kühlkammer (130) des Kühlschranks eine zweite Temperatur erreicht, stoppen des Kompressors (300) und kontinuierliches Weiterbetreiben des Gebläses (500), bis die Temperatur des Verdampfers (400) eine dritte Temperatur erreicht, und wenn die Temperatur des Verdampfers (400) die dritte Temperatur erreicht, das Gebläse (500) stoppt,
wobei die erste Temperatur höher ist als die dritte Temperatur,
wobei, nachdem der Kompressor (300) für die vorbestimmte Anzahl von EIN-AUS-Zyklen betrieben wurde oder wenn die Temperatur der Kühlkammer (130) die zweite Temperatur erreicht, eine Drehzahl des Gebläses (500) erhöht wird.

## Revendications

1. Un réfrigérateur à fonction de dégivrage comprenant : une armoire (100), une plaque (120) formant canal d'air disposée dans l'armoire pour définir une chambre de réfrigération (130) et un canal d'air (140) formé entre la plaque (120) formant canal d'air et une paroi arrière de l'armoire à l'intérieur de l'armoire, une porte (200), et un évaporateur (400) monté dans le canal d'air,
le réfrigérateur comprenant en outre :
un capteur de dégivrage (410) disposé sur l'évaporateur pour détecter une température de l'évaporateur, un compresseur (300) relié à l'évaporateur, un ventilateur (500) disposé dans le canal d'air pour faire circuler l'air entre le canal d'air (140) et la chambre de réfrigération (130), **caractérisé en ce que** le capteur de dégivrage (410) est disposé à la sortie de l'évaporateur,
un contrôleur (800) relié au capteur de dégivrage (410), au compresseur (300) et au ventilateur (500), respectivement, le contrôleur (800), après que le compresseur (300) ait fonctionné sur un nombre prédéterminé de cycles d'ARRÊT-MARCHE, commande l'arrêt du compresseur (300) et commande le fonctionnement continu du ventilateur (500) jusqu'à ce qu'une température détectée par le capteur de dégivrage (410) atteigne une première température comprise entre 3°C et 5°C, et
un capteur de température (131) disposé dans la chambre de réfrigération (130) pour détecter une température de la chambre de réfrigération (130) et relié au contrôleur (800),
le contrôleur (800), pendant le nombre prédéterminé de cycles d'ARRÊT-MARCHE, lorsque la température détectée par le capteur de température (131) atteint une deuxième température, commandant l'arrêt du compresseur (300) et commande le fonctionnement en continu du ventilateur (500) jusqu'à ce que la température détectée par le capteur de dégivrage (410) atteigne une troisième température, et, lorsque la température détectée par le capteur de dégivrage (410) atteint la troisième température, le contrôleur (800) commande l'arrêt du ventilateur (500),
la première température étant supérieure à la troisième température,
le contrôleur (800), après que le compresseur (300) ait fonctionné pour le nombre prédéterminé de cycles d'ARRÊT-MARCHE ou lorsque la température détectée par le capteur de température (131) atteint la deuxième température, commandant une augmentation de la vitesse du ventilateur (500).

2. Un procédé de commande d'un réfrigérateur à fonction de dégivrage, **caractérisé en ce que** le procédé comprend des étapes consistant à :
détecter si un compresseur (300) du réfrigérateur fonctionne pendant un nombre prédéterminé de cycles d'ARRÊT-MARCHE,
après que le compresseur (300) ait fonctionné pour un nombre prédéterminé de cycles d'ARRÊT-MARCHE, arrêter le compresseur (300) et faire fonctionner en continu un ventilateur (500) du réfrigérateur jusqu'à ce qu'une température d'un évaporateur (400) du réfrigérateur atteigne une première température qui est comprise entre 3°C et 5°C, afin de dégivrer l'évaporateur (400) disposé dans un canal d'air (140) du réfrigérateur, et
arrêter le compresseur (300) pendant le nombre prédéterminé de cycles d'ARRÊT-MARCHE, lorsqu'une température d'une chambre de réfrigération (130) du réfrigérateur atteint une deuxième température, et faire fonctionner en continu le ventilateur (500) jusqu'à ce que la température de l'évaporateur (400) atteigne une troisième température, et, lorsque la température de l'évaporateur (400) atteint la troisième température, le ventilateur (500) cesse de fonctionner,
la première température étant supérieure à la troisième température, et
après que le compresseur (300) ait fonctionné pour le nombre prédéterminé de cycles d'ARRÊT-MARCHE ou lorsque la température de la chambre de réfrigération (130) atteint la deuxième température, une vitesse du ventilateur (500) étant augmentée.
